# EUROPEAN PATENT SPECIFICATION

(11) **EP 2 661 452 B1**
(45) Date of publication and mention of the grant of the patent: **12.04.2017**
(21) Application number: 12700004.0
(22) Date of filing: 02.01.2012
(51) Int. Cl.: C09D 7/12, C09D 175/04, C08G 18/48, C08G 18/66, C08G 18/08

(54) **AQUEOUS 1K COATING SYSTEM AND METHOD FOR IMPROVING THE APPEARANCE OF GRAINED WOOD SURFACES**
WÄSSRIGES 1K-BESCHICHTUNGSSYSTEM UND VERFAHREN ZUR VERBESSERUNG DES ERSCHEINUNGSBILDES VON KÖRNIGEN HOLZOBERFLÄCHEN
SYSTÈME DE REVÊTEMENT 1K AQUEUX ET PROCÉDÉ D'AMÉLIORATION DE L'APPARENCE DE SURFACES EN BOIS GRAINÉES

(30) Priority: 05.01.2011 EP 11150152
(43) Date of publication of application: 13.11.2013
(73) Proprietor: Covestro Deutschland AG, 51373 Leverkusen (DE)
(72) Inventor: GERTZMANN, Rolf, 51377 Leverkusen (DE); PEERLINGS, Henricus, 55595 Saarbrücken (DE); GARCIA MARTINEZ, Joan, Miquel, E-08030 Barcelona (ES); ALMATO GUITERAS, Maria, E-08032 Barcelona (ES)
(74) Representative: Levpat
(86) International application number: PCT/EP2012/050014
(87) International publication number: WO 2012/093104

(56) References cited:
- WO-A2-2011/051199
- DE-A1- 10 308 104
- DE-A1- 10 308 106
- DE-A1-102006 058 527

## Description

The present invention discloses a 1K coating system comprising a polyurethane and/or polyurethane-polyacrylate polymer which is used for enhancing the appearance of grained wood surfaces. The invention relates to a method for improving the appearance of grained wood surfaces, the use of a coating system according to the invention for the coating of grained wood surfaces and a grained wood surface comprising a coating obtained by applying a coating system according to the invention and subsequent drying of the coating system.

Aqueous coating compositions are increasingly being used instead of systems containing solvent with the objective of reducing emissions of organic solvents. Polyurethane dispersions comprise one important class of aqueous lacquer binders. D. Dieterich provides an overview in Prog. Org. Coatings 9, 281 (1981). Polyurethane dispersions combine the important properties of resistance to chemicals and mechanical stress. It is thus advantageous to use polyurethane dispersions, especially for coating surfaces exposed to severe mechanical stress.

The appearance of the grain of the wood is an important point of interest in clear wood varnishes. A high contrast within the wood is desirable for wood surfaces such as parquet flooring and furnitures.

The present invention therefore has the object of providing a method for enhancing the grain appearance of wood in a simple manner without compromising other positive features of the coating system.

According to the invention this object is achieved by a method which uses a one-component coating system comprising an aqueous polyurethane and/or polyurethane-polyacrylate polymer dispersion, wherein the coating system comprises one or more compounds of elements of sub-groups 5 and/or 6 of the periodic table in which the particular element has an oxidation state of at least +4.

Publication DE 103 08 104 A1 discloses a coating composition comprising a polyurethane and lithium molybdate, a compound comprising a metal of the VI. sub-group of the periodic table having an oxidation state of +6. Wooden substrates and methods for improving the appearance of a wooden substrate are not disclosed therein. It has surprisingly been found that the addition of the aforementioned compounds of elements of sub-groups 5 and/or 6 of the periodic table lead to a desired improvement in the contrast of the grain in the wood when compared to those aqueous dispersions lacking these compounds. Existing polymer binders may be used, thus reducing the need for additional development of formulations.

It is required that the coating system is based on a room temperature drying one component (1K) system drying at ambient temperature. 1K systems for the purposes of the present invention are such (coating) materials in which a single binder or a combination of different binder components (polyurethane and/or polyurethane-polyacrylate) is used.

The solvents of the aqueous polymer dispersions used in the invention are water and, if needed, organic solvents or mixtures of organic solvents.

As organic solvents it is possible to use all known solvents. Preference is given to the solvents used in the paints industry such as xylene, butyl acetate, ethyl acetate, butylglycol acetate, methoxypropyl acetate, hydrocarbons such as Solvesso® 100 (Exxon Chemicals), solvent naphtha or N-methylpyrrolidone. Preferred are more hydrophilic solvents with non-hydrolyzable or slowly hydrolyzable groups such as ethylene or propylene glycols and their mono- or diethers, texanol, etc.

If needed at all, the organic solvents are used in the absolutely necessary minimum amount.

Paints, inks and other formulations are prepared from the one-component coating systems of the invention by conventional methods.

The aqueous coating systems of the invention are suitable for all fields of use in which aqueous painting and coating systems with stringent requirements concerning the resistance of the films are used. In particular this is the coating and sealing of wood and wood-based materials and herein the use as transparent primer, and/or topcoat materials, clearcoat materials and high-gloss and matte coating materials potentially useful for all layer of build up of completely coated devices.

Preference is given to the coating of wood or wood-based materials at the usual processing temperatures such as 5 °C to 100 °C.

The present invention will be further described in connection with preferred embodiments which can be combined freely unless the context clearly indicates otherwise.

In one embodiment of the coating system used in a method according to the invention, the polyurethane polymer is obtainable by the reaction of a mixture comprising:
a) one or more polyisocyanates,
b) one or more polyols having average molar weights Mₙ of > 500 g/mol to ≤ 6000 g/mol,
c) optionally, one or more polyols having average molar weights Mₙ of ≥ 62 g/mol to ≤ 500 g/mol,
d) isocyanate-reactive, ionically or potentially ionically hydrophilicizing compounds and/or isocyanate-reactive nonionically hydrophilicizing compounds,
e) optionally, one or more polyamines having average molecular weights Mₙ of ≤ 500 g/mol,
f) optionally, one or more monoalcohols and/or monoamines having average molar weights Mₙ of ≤ 248 g/mol.

In another embodiment of the coating system according to the invention, the polyurethane polyacrylate polymer is obtainable by the reaction of a mixture comprising:
a) one or more polyisocyanates,
b) one or more polyols having average molar weights Mₙ of > 500 g/mol to ≤ 6000 g/mol,
c) optionally, one or more polyols having average molar weights Mₙ of ≥ 62 g/mol to ≤ 500 g/mol,
d) isocyanate-reactive, ionically or potentially ionically hydrophilicizing compounds and/or isocyanate-reactive nonionically hydrophilicizing compounds,
e) optionally, one or more polyamines having average molecular weights Mₙ of ≤ 500 g/mol,
f) optionally, one or more monoalcohols and/or monoamines having average molar weights Mₙ of ≤ 248 g/mol and
g) ethylenically unsaturated monomers containing no Zerewitinoff-active hydrogen atoms.

Hydrogen bonded to N, O or S is designated as Zerewitinoff-active hydrogen (sometimes also only as "active hydrogen") if it gives methane by reaction with methylmagnesium iodide by a process discovered by Zerewitinoff. Typical examples of compounds having a Zerewitinoff-active hydrogen are compounds which contain carboxyl, hydroxyl, amino, imino or thiol groups as functional groups.

In the case of polyurethane polyacrylates, ethylenically unsaturated monomers g) are used wherein the ratio by mass of the sum of the mass of monomers a) to f) to the mass of the monomer(s) g) is in the range from 90:10 to 10:90, preferably 90:10 to 70:30, particularly preferably 90:10 to 50:50.

The invention also provides polyurethane polyacrylates which can be obtained by mixing a polyurethane dispersion with a polyacrylate dispersion prepared by the emulsion polymerization method.

The polyurethane and polyurethane polyacrylate dispersions prepared according to the invention are low in cosolvents or even entirely free from cosolvents. The polyurethane and polyurethane polyacrylate dispersions prepared according to the invention preferably contain 0.0 to 0.9 wt.%, particularly preferably 0.0 to 0.5 wt.%, most particularly preferably 0.0 to 0.4 wt.% of cosolvents, relative to the total amount of polyurethane and polyurethane polyacrylate dispersion.

Component a) suitably includes the polyisocyanates typically used in polyurethane chemistry, such as diisocyanates of the formula R¹(NCO)₂, R¹ being an aliphatic hydrocarbon radical having 4 to 12 carbon atoms, a cycloaliphatic hydrocarbon radical having 6 to 15 carbon atoms, an aromatic hydrocarbon radical having 6 to 15 carbon atoms or an araliphatic hydrocarbon radical having 7 to 15 carbon atoms.

Examples of preferred diisocyanates are tetramethylene diisocyanate, hexamethylene diisocyanate, 4,4'-diisocyanatodiphenylmethane, 2,4'-diisocyanatodiphenylmethane, 2,4-diisocyanatotoluene, 2,6-diisocyanatotoluene or α,α,α',α',-tetra-methyl-m- or p-xylylene diisocyanate and also mixtures of the stated diisocyanates. Particularly preferred diisocyanates are 1-isocyanato-3,3,5-trimethyl-5-isocyanatomethylcyclohexane (isophorone diisocyanate) and 4,4'-diisocyanatodicyclohexylmethane.

Where appropriate it is possible to use small amounts of isocyanates with a functionality of more than two, for example, in order thereby to ensure a certain degree of branching or of crosslinking in the polyurethane. The amount of polyisocyanate to be used is governed by its functionality and should be calculated such that the NCO prepolymer still remains stirrable and dispersible. Such isocyanates are obtained, for example, by reacting difunctional isocyanates with one another in such a way that some of their isocyanate groups are derivatized to form isocyanurate, biuret, allophanate, uretdione or carbodiimide groups. Those polyisocyanates hydrophilicized by way of ionic groups, of the kind typically used as crosslinkers in aqueous two-component (2K) PU coating materials, are also suitable. Examples of such isocyanates are described in EP-A 510 438. Hydrophilicized polyisocyanates are obtained, moreover, by reacting polyisocyanates with isocyanate-reactive compounds which carry sulphuric acid groups. Polyisocyanates of this kind may have high functionalities, of more than 3, for example.

Suitable polymeric polyols b) have a molar weight range (Mₙ) of > 500 to ≤ 6000 g/mol, preferably of > 500 to ≤ 3000 g/mol and with particular preference of ≥ 650 to ≤ 2500 g/mol. The OH functionality is at least ≥ 1.8 to ≤ 3, preferably ≥ 1.9 to ≤ 2.2 and with particular preference ≥ 1.92 to ≤ 2.0. The polyols are, for example, polyesters, polyethers based on propylene oxide and/or tetrahydrofuran, polycarbonates, polyestercarbonates, polyacetals, polyolefins, polyacrylates and polysiloxanes. Preference is given to using polyesters, polyethers, polyestercarbonates and polycarbonates. Particular preference is given to polyesters, polyethers, polyestercarbonates and polycarbonates having OH functionalities between 1.92 and 2.0. Mixtures of the polymeric polyols b) described are likewise suitable.

In addition, in a blend with the stated polyols b), it is also possible to use fatty acid-containing polyesters b1), which are obtained by esterification or transesterification product(s) of drying and/or non-drying fatty acids and/or oils with at least bifunctional polyol compounds, as are described in EP-A 0 017 199, for example (p. 10, line 27 to p. 11, line 31). A further variant of fatty acid-modified polyols b1) is partially dehydrated castor oil, which is obtained by thermal loading of castor oil with acid catalysis and is described in EP-A 0 709 414 (p. 2, lines 37-40).
Likewise suitable as polyols b1) are those disclosed in DE-A 199 30 961 (p. 2, lines 46 - 54; p. 2, line 67 to p. 3, line 3). Aliphatic and cycloaliphatic monocarboxylic acids having 8 to 30 carbon atoms, such as for example oleic acid, lauric acid, linoleic acid or linolenic acid, are reacted therein with castor oil in the presence of glycerol.
Also suitable as polyols b1) are transesterification products of castor oil and one or more other triglycerides.
With regard to OH groups the fatty acid group-containing components b1) are as a statistical mean bifunctional fatty acid group-containing components containing glycerol or trimethylolpropane units. The fatty acid-containing polyesters b1 are particularly preferably used with polyols b) which have an Mₙ of 650 to 2500 g/mol, OH functionalities of 1.9 to 2 and belong to the group of esters, ethers, carbonates or carbonate esters.

Low molecular weight polyols c) with a molecular weight range (Mₙ) of ≥ 62 to ≤ 500 g/mol, preferably ≥ 62 to ≤ 400 g/mol and with particular preference ≥ 90 to ≤ 300 g/mol are the bifunctional alcohols which are typically used in polyurethane chemistry, such as ethanediol, 1,2- and 1,3-propanediol, 1,2-, 1,3- and 1,4-butanediol, 1,5-pentanediol, 3-methylpentane-1,5-diol, 1,6-hexanediol, neopentyl glycol, cyclohexane-1,4-dimethanol, 1,2-and 1,4-cyclohexanediol, 2-ethyl-3-propylpentanediol, 2,4-dimethylpentanediol, 2-ethyl-2-butylpropanediol, diols containing ether oxygen, such as diethylene glycol, triethylene glycol, tetraethylene glycol, dipropylene glycol, tripropylene glycol, polyethylene glycols, polypropylene glycols or polybutylene glycols, N-substituted ethanolamines, and mixtures of these products. Preferred polyols c) are 1,4-butanediol, 1,5-pentanediol, 3-methylpentane-1,5-diol, 1,6-hexanediol, neopentyl glycol, cyclohexane-1,4-dimethanol, 1,2-and 1,4-cyclohexanediol, and N-substituted ethanolamines. Especially preferred polyols c) are 1,4-butanediol, 1,6-hexanediol, neopentyl glycol, and N-substituted ethanolamines. Alcohols of the stated molecular weight range with a functionality of three or more can be used as well in proportion in an amount such that the prepolymer / polymer solution remain stirrable. Components of this kind include trimethylolpropane, glycerol, and pentaerythritol.

In addition, in a blend with the stated polyols c), it is also possible to use fatty acid-containing components c1) having molar weights ≤ 500 g/mol, which are obtained by esterification or transesterification product(s) of drying and/or non-drying fatty acids and/or oils with at least bifunctional polyol compounds, as described for example in EP-A 0 017 199 (p. 10, line 27 to p. 11, line 31). Polyol compounds used are preferably trifunctional and tetrafunctional hydroxyl components such as trimethylolethane, trimethylolpropane, glycerol or pentaerythritol, for example. Also suitable as component c1) are fatty acid alkanolamides which are based on non-drying, semidrying and/or drying fatty acids. Fatty acid diethanolamides are preferred components c1). Such components are described in DE 10215053 (p.5, lines 54 - 59); oxidatively drying, water-dilutable, acid-functional polyurethane dispersions are claimed therein which are obtained by reacting fatty acid amide diols prepared from N,N-dialkanolamines and fatty acids or fatty acid derivatives.

Suitable components d) are low molecular weight compounds which contain ionic groups or are capable of forming an ionic group such as dihydroxycarboxylic acid, diaminocarboxylic acids, dihydroxysulfonic acid and diaminosulfonic acid, such as dimethylolpropionic acid, dimethylolbutyric acid, hydroxypivalic acid, reaction products of (meth)acrylic acid and polyamines (e.g. DE-A-19 750 186, p. 2, lines. 52-57) or polyol components containing sulphonate groups, such as the propoxylated adduct of sodium hydrogen sulphite with 2-butanediol, for example, or the polyesters described in EP-A 0 364 331 (p. 6, lines. 1-6) and constructed from salts of sulphoisophthalic acid. Aminoalkyl sulphonic acids such as N-(2-aminoalkyl)-2-aminoalkylsulphonic acid or 1,2 or 1,3-propylene diamine-ß-ethyl sulfonic acid may also be used.

Suitable neutralizing components for the anionic dispersions are the known tertiary amines, ammonia and alkali metal hydroxides.

Suitable nonionic components d) may be polyoxyalkylene ethers, each molecule of which bears at least one hydroxy or amino group and which consist, for example, of an alcohol and polyethylene oxide blocks having a molecular weight Mₙ of 250 to approximately 3000 g/mol. Given a sufficient content of these nonionic hydrophilic compounds, it is also possible to dispense with using ionic, hydrophilic compounds as outlined above.

Suitable chain extenders e) include polyamines having a molar weight Mₙ of ≤ 500 g/mol, such as ethylenediamine, 1,2-diaminopropane, 1,4-diaminobutane, 1,6-hexamethylenediamine, 2-methylpentane-1,5-diamine, isophoronediamine, 4,4'-diaminodicyclohexylmethane, piperazine, N²-methyldiethylenetriamine or diethylenetriamine. The diamines ethylenediamine, 2-methylpentane-1,5-diamine or isophoronediamine are preferred.

Suitable components f) include monofunctional alcohols having 1 to 14, preferably 1 to 10, with particular preference 1 to 8 carbon atoms. These include, for example, methanol, ethanol, 1-propanol, 2-propanol, primary butanol, secondary butanol, n-hexanol and its isomers, 2-ethylhexyl alcohol, ethylene glycol monomethyl ether, diethylene glycol monomethyl ether, ethylene glycol monobutyl ether, diethylene glycol monobutyl ether, propylene glycol monomethyl ether, dipropylene glycol monomethyl ether, tripropylene glycol monomethyl ether, propylene glycol monobutyl ether, dipropylene glycol monobutyl ether, tripropylene glycol monobutyl ether, 1-octanol, 1-dodecanol, 1-hexadecanol, lauryl alcohol, stearyl alcohol and hydroxyethylmethacrylate, hydroxypropylmethacrylate, hydroxyethylacrylate, hydroxypropylacrylate, hydroxybutylacrylate, hydroxybutylmethacrylate or alkyleneoxid group containing hydroxymonomers, as e.g. products obtained by the addition of ethylenoxide, propylenoxide or butylenoxide to (meth)acrylacid, (Meth-)acrylacidhydroxylester or (meth-)allylalcohol, as well as mono- und diallylether derived from trimethylolpropane, glycerine or pentaerythrit.

Regarded as preferred components f) are ethanol, 1-propanol, 2-propanol, primary butanol, secondary butanol, n-hexanol and its isomers, 2-ethylhexyl alcohol, ethylene glycol monomethyl ether, diethylene glycol monomethyl ether, ethylene glycol monobutyl ether and diethylene glycol monobutyl ether. Regarded as particularly preferred components f) are n-butanol, n-hexanol, 2-ethylhexyl alcohol, ethylene glycol monobutyl ether or ethylene glycol monomethyl ether. Especially in case of polyurethane polyacrylates as component f) preferred are hydroxyethylmethacrylate, hydroxypropylmethacrylate, hydroxyethylacrylate, hydroxypropylacrylate, hydroxybutylacrylate, hydroxybutylmethacrylate or alkyleneoxid group containing hydroxymonomers, as e.g. products obtained by the addition of ethylenoxide, propylenoxide or butylenoxide to (meth)acrylacid, (meth-)acrylacidhydroxylester or (meth-)allylalcohol, as well as mono- und diallylether derived from trimethylolpropane, glycerine or pentaerythrit..Especially preferred as component f) for Polyurethan- polyacrylates are those monomers selected form hydroxyethylacrylate, hydroxyethylmethacrylate, hydroxypropylacrylate, hydroxypropylmethacrylate, hydroxybutylacrylate and hydroxybutylmethacrylate.

Further preferred components f) are monoamines which have a molar weight below 147 g/mol, such as ammonia, methylamine, ethylamine, diethylamine, propylamine, n-butylamine, dibutylamine, 2-aminobutane, 1-aminopentane, 2-aminopentane, ethanolamine, diethanolamine, 1-amino-2-propanol, 3-amino-1-propanol, 2-amino-1-butanol, 5-amino-1-pentanol. The preferred monoamines include n-butylamine, 2-aminobutane, 1-aminopentane, 2-aminopentane, ethanolamine or diethanolamine. Especially preferred are n-butylamine or diethanolamine.

Vinyl unsaturated, polymerizable compounds containing no groups having Zerewitinoff atoms can be used as component g). Nonionically hydrophilicized acrylates or methacrylates, such as for example methoxy polyethylene glycol acrylate or methacrylate, or bisacrylates or bismethylacrylates, such as for example hexanediol diacrylate or methacrylate, ethylene glycol di(meth)acrylates, oligo- and polyethylene glycol di(meth)acrylates, which are used in small amounts of up to 10 wt.%, preferably up to 6 wt.% and particularly preferably up to 3 wt.% relative to component B, are suitable. Likewise suitable are other vinyl unsaturated, polymerizable monomers such as for example vinyl ester, vinyl chloride, vinyl methyl ether, vinyl isobutyl ether, 2-ethylhexyl vinyl ether, acrylamides and methacrylamides. Preferred monomers are C₁-C₁₀ alkyl esters and C₅-C₁₀ cycloalkyl esters of acrylic and methacrylic acid, such as for example methyl, ethyl, n-propyl, isopropyl, n-butyl, isobutyl, tert-butyl, hexyl, cyclohexyl, isobornyl and 2-ethylhexyl acrylate or methacrylate. Likewise suitable are compounds having further functional groups, such as for example acetoacetoxy groups. Mixtures of the cited monomers are likewise suitable. The preferred monomers (b1) also include polymerizable aromatic compounds such as for example styrene, methyl styrene, vinyl toluene or divinyl benzene. Mixtures of the cited compounds are likewise suitable.

Preparation of the dispersions according to the invention can take place by all known methods for preparing polyurethanes or polyurethane polyacrylates. The prepolymer mixing method or the acetone method is preferably used for preparing polyurethanes. Examples of the various methods can be found in EP 189 945 A2, EP 1 717 257 A1 (p. 5 line 26 - p.6 line 5), US 4318833 (column 1 line 64 - column 2 line 5) and US 148970, initially from the components.

In another embodiment of the coating system according to the invention, the compounds of elements of sub-groups 5 and/or 6 of the periodic table are compounds of elements chosen from the group consisting of vanadium, tantalum, molybdenum and tungsten.

Examples of compounds of molybdenum and/or of tungsten which can be used in accordance with the invention can be selected from the group consisting of ammonium molybdate, lithium molybdate, sodium molybdate, potassium molybdate, rubidium molybdate, caesium molybdate, ammonium paramolybdate (NH₄)₆Mo₇O₂₄.4H₂O, molybdenyl bisacetylacetonate MoO₂(C₅H₇O₅)₂, molybdenum dioxide tetramethylheptadionate MoO₂(TMHD)₂, molybdenum alkoxides formed from 1,2-, 1,3- or 1,4-diols such as ethylene glycol, propylene glycol or 1,4-butanediolmolybdic acid, molybdenum oxides, tetraethylammonium molybdate, sodium tungstate, magnesium molybdate, calcium molybdate, tungstic acid, lithium tungstate and phosphotungstic acid.

Preferably, the compounds of elements of sub-groups 5 and/or 6 of the periodic table are chosen from the group consisting of ammonium molybdate, lithium molybdate, sodium molybdate, potassium molybdate, rubidium molybdate, caesium molybdate, ammonium paramolybdate, molybdenyl-bis-acetylacetonate, molybdenum dioxide tetramethyl heptadionate, molybdenum alcoholates of 1,2-, 1,3- and/or 1,4-diols, molybdenum oxides, tetraethylammonium molybdate, magnesium molybdate and calcium molybdate. Lithium molybdate is particularly preferred.

In another embodiment of the coating system according to the invention, the compounds of elements of sub-groups 5 and/or 6 of the periodic table are present in an amount of ≥ 0,0001 wt.% to ≤ 0,1 wt.% in the aqueous dispersion. Preferred ranges are ≥ 0,001 wt.% to ≤ 0,05 wt.%. The efficacy of these compounds is independent of the manner in which it is added. They may be added to the dispersion directly or also during previous steps in the manufacturing of the dispersion.

The present invention further relates to a method for improving the appearance of grained wood surfaces, comprising the steps of:
- providing a grained wood surface and
- applying a coating system according to the invention to the grained wood surface.

With respect to wood the term "grain" refers to the alternating regions of relatively darker and lighter wood resulting from the differing growth parameters occurring in different seasons. A grained wood surface is then a surface which displays such alternating regions, as opposed to fiberboards. Preferably, the wood surface is otherwise untreated before application of the dispersion.

In the method according to the invention the coating system is applied to the grained wood surface. The application may generally be effected by spraying, with plain rollers, gravure rollers, screen rollers, in serigraphy, also rotary serigraphy, and with a doctor-blade spreader, a chambered doctor blade or a rotary doctor blade, for example.

Preferably, the wood surface is selected from the group consisting of oak wood, birch wood, maple wood and mahogany wood.

Yet another aspect of the present invention is the use of a coating system according to the invention for the coating of grained wood surfaces.

The present invention is also directed towards a grained wood surface comprising a coating obtained by applying a coating system according to the invention and subsequent drying of the coating system. Preferably, the wood surface is selected from the group consisting of oak wood, birch wood, maple wood and mahogany wood. Drying of the coating system may take place at the usual temperatures used to process 1K binder systems such as 30 °C to 100 °C.

The invention is further illustrated with respect to the following examples without wishing to be limited by them.

### Glossary:

| **Trade name** | **Name** | **Manufacturer** |
|---|---|---|
| Desmodur^{®} W | 4,4'-Diisocyanatodicyclohexylmethane | Bayer AG, Leverkusen, DE |
| Desmodur^{®} I | Isophorone diisocyanate | Bayer AG, Leverkusen, DE |
| Bayhydur^{®} 305 | Hydrophilicized polyisocyanate; 16.2 wt.% NCO | Bayer AG, Leverkusen, DE |
| Proglyde^{®} DMM | Dipropylene glycol dimethyl ether | Dow Chemicals, Schwalbach, DE |
| Terathane^{®} 650 | Polytetramethylene glycol, F = 2 | Invista, Hattersheim a/M, DE |
| Byk^{®} 025, 028, 093, 341, 346, 349 | Formulation additive | Byk Chemie, Wesel, DE |
| Aquacer 535 | Formulation additive | Byk Chemie, Wesel, DE |
| BDG: Butyl diglycol | Cosolvent | |
| Acrysol^{®} RM8 | Thickener, 5% in water | Dow Chemicals Frankfurt, DE |

- LP112: Polypropylene oxide with an average molar weight of 1000 g/mol. Product of Bayer Material Science AG.
- DMPS: Dimethylol propionic acid
- HDO: 1,6-Hexanediol
- HEMA: Hydroxyethyl methacrylate
- T80®: Desmodur T80, toluene diisocyanate, product of Bayer MaterialScience AG.
- PU 1806®: Methylene diisocyanatophenyl, mixture of 4,4' and 2,4' isomers. Product of Bayer MaterialScience AG
- Simulsol® P23: Nonionic surfactant. Product of Seppic
- HyHy: Hydrazine hydrate
- TEA: Triethylamine
- Sty: Styrene
- MMA: Methyl methacrylate
- 2-EHA: 2-Ethylhexyl acrylate
- Fe(II): Iron(II) sulfate heptahydrate
- Trilon B®: EDTA tetrasodium salt, product of BASF AG
- Rongalit C®: Reducing agent based on a sodium salt of a sulfinic acid derivative. Product of BASF AG.
- TBHP: tert-Butyl hydroperoxide

### Dispersion 1: aqueous one-component (1K) polyurethane/polyacrylate dispersion

31 g of DMPS with 148 g of Terathane® 650 and 37 g of HDO and 14 g of hydroxyethyl methacrylate were placed in a 2000 ml flask and 147 g of acetone were added. A mixture of 54 g of TDI 80 and 156 g of PU 1806 was added to the stirred mixture and after reaching an exothermic state the mixture was refluxed whilst stirring overnight until the NCO value was 1.50% (theoretical: 1.7%). Then a further amount of acetone (42 g) and 2.2 g of Simulsol® P23 were added and the mixture was homogenized. Then 500 g of this mixture were dispersed in an aqueous preparation consisting of a mixture of 1.23 g of hydrazine hydrate and 17 g of TEA in 697 g of water, heated to 30°C. The acetone was then removed by distillation under vacuum (100 mbar) and at a temperature of 40°C. A material having the following properties was formed:

| | |
|---|---|
| Solids content: | 28.9% (diluted) |
| Average particle size: | 108 nm |
| pH (10% dilution): | 8.75 |

### Polyurethane polyurea polyacrylate:

The polyurethane polyurea as described above (799 g) was placed in a 2000 ml flask and diluted with water (40 ml). Then a mixture consisting of styrene (71 g), MMA (32 g) and 2-EHA (17 g) was added within 5 minutes, immediately followed by 28.8 of an aqueous mixture consisting of 1.3 g of Rongalit® C, 215 mg of Trilon B and 10.7 mg of Fe(II) in 27.3 g of water. Then a solution of TBHP (1.0 g) in 20.4 g of water was added dropwise at a temperature of 30°C over a period of 20 minutes. After reaching an exothermic state the mixture was stirred for a further 4 hours at 50°C. The dispersion formed had the following properties:

| | |
|---|---|
| Solids content: | 34.0% |
| Average particle size: | 99 nm |
| pH (10% dilution): | 8.72 |

### Dispersion 2: aqueous one-component (1K) aliphatic, fatty acid modified anionic polyurethane dispersion

### Polyester oligomer precursor

3200 g of castor oil and 1600 g of soya oil along with 2.0 g of dibutyl tin oxide were weighed into a 5-litre reactor with a distillation column. A nitrogen stream (5 1/h) was passed through the reactants. The mixture was heated to 240°C within 140 min and cooled after 6 h at 240°C. The OH value was 108 mg KOH/g, the acid value 2.5 mg KOH/g.

98.9 g of acetone and 19.6 g of triethylamine were added to and mixed with a mixture consisting of 181.0 g of PolyTHF^{®} 2000, 140.3 g of the polyester oligomer precursor, 37.2 g of dimethylol propionic acid and 18.3 g of 1,6-hexanediol at 55°C. 275.4 g of Desmodur^{®} W were added and the reaction mixture was refluxed until an NCO content of 4.3% was reached. 500 g of the prepolymer were dispersed whilst stirring vigorously in 720 g of water which had been heated to a temperature of 30°C. After 5 minutes a solution of 4.2 g of hydrazine hydrate and 6.2 g of ethylene diamine in 73 g of water was added within 5 minutes. The mixture was stirred at 45°C to react the isocyanate groups completely until no more NCO could be detected by IR spectroscopy. After cooling, the mixture was filtered through a Seitz T5500 filter.

### Characteristics of the polyurethane dispersion:

| | |
|---|---|
| Solids content: | 35.0% |
| Average particle size (LCS): | 55 nm |
| pH (20°C) (10% aqueous solution): | 8.4 |

### Example 1 (comparative example)

The following formulation was prepared (numbers given are weight percentages):

| | |
|---|---|
| Dispersion 1 | 87,9 |
| BDG:water 1:1 | 8,0 |
| Byk 028 | 1,0 |
| Byk 346 | 0,2 |
| Byk 341 | 0,4 |
| Aquacer 535 | 2,0 |
| Acrysol RM-8W:water 1:1 | 0,5 |

### Example 2

The same formulation as in example 1 was prepared. Additionally, 35 ppm of Na₂MoO₄ were added after the preparation.

### Example 3 and 5 (comparative example)

The following formulation was prepared (numbers given are weight percentages):

| | |
|---|---|
| Dispersion 2 | 82,9 |
| BDG:water 1:1 | 14,3 |
| Byk 093 | 1,0 |
| Byk 025 | 0,4 |
| Byk 341 | 0,4 |
| Byk 349 | 0,5 |
| Acrysol RM-8W | 0,7 |

### Example 4 and 6

The same formulation as in example 3 was prepared. Additionally, 35 ppm of Li₂MoO₄ were added after the preparation.

The formulations as described in examples 1 to 4 were set to a flow cup viscosity of 25-30 seconds with the aid of a thickener solution and applied to an oak wood surface with a brush (approx. 120 g/m²). After drying at room temperature for 6 h the first layer was sanded slightly before a second coating layer (120 g/m²) was applied. The intensity of the coloring of the wood (referred to as wood wetting) was assessed visually on a scale of 1 to 5 after the second layer has dried. A value of 1 being undesirable with no expression of the wood grain and 5 being a (desired) strong expression of the grain.

The results are summarized below (PUR: polyurethane; PAC: polyacrylate):

| Example | Type of 1K water based dispersion | Quantity (cal. on dispersions) / Qualtity of metal salt | wood wetting |
|---|---|---|---|
| 1 (comp.) | PUR/PAC | 0 | 3 |
| 2 | PUR/PAC | 35ppm Na₂MoO₄ | 4 |
| 3 (comp.) | PUR | 0 | 3 |
| 4 | PUR | 35 ppm Li₂MoO₄ | 4 |
| 5 (comp.) | PUR | 0 | 3 |
| 6 | PUR | 35 ppm K₂VO₄ | 4 |

### Preparation of the two-component mixtures

According to the invention: 90 g of dispersion 2 were prepared and 10 g of a 1:1 (parts by weight) mixture consisting of water and butyl glycol were added. Then 25 mg of a 20% aqueous solution of potassium vanadate were added whilst stirring and the mixture was homogenized. Later 10 g of Bayhydur 305 were added to the mixture whilst stirring and the mixture was homogenized. After 5 minutes the two-component system was applied to a wooden board with a case knife (210 µm). Once the first layer had dried the expression of the grain was assessed and rated with a 4.

The comparative example contains no metal salt with an otherwise identical preparation and composition. The expression of the grain of the first applied layer was rated with a 3.

In the examples according to the invention the wood wetting/coloring intensity is superior to those examples without molybdate (or vanadate) addition. Without wishing to be bound by theory, it is believed that the type of polymer dispersion does not play a significant role in this effect.

## Claims

1. A method for improving the appearance of grained wood surfaces, comprising the steps of:
- providing a grained wood surface and
- applying a one-component coating system comprising an aqueous polyurethane and/or polyurethane-polyacrylate polymer dispersion, **characterised in that** that the coating system comprises one or more compounds of elements of sub-groups 5 and/or 6 of the periodic table in which the particular element has an oxidation state of at least +4, to the grained wood surface.

2. Use of a one-component coating system comprising an aqueous polyurethane and/or polyurethane-polyacrylate polymer dispersion, **characterized in that** that the coating system comprises one or more compounds of elements of sub-groups and/or 6 of the periodic table in which the particular element has an oxidation state of at least +4, for the coating of grained wood surfaces.

3. A grained wood surface comprising a coating obtained by applying a one-component coating system comprising an aqueous polyurethane and/or polyurethane-polyacrylate polymer dispersion, **characterized in that** that the coating system comprises one or more compounds of elements of sub-groups 5 and/or 6 of the periodic table in which the particular element has an oxidation state of at least +4, and subsequent drying of the coating system.

## Patentansprüche

1. Verfahren zur Verbesserung des Aussehens von gemaserten Holzoberflächen, das folgende Schritte umfasst:
- Bereitstellen einer gemaserten Holzoberfläche und
- Aufbringen eines Einkomponenten-Beschichtungssystems, das eine wässrige Polyurethan- und/oder Polyurethan-Polyacrylat-Polymerdispersion umfasst, **dadurch gekennzeichnet, dass** das Beschichtungssystem eine oder mehrere Verbindungen von Elementen der 5. und/oder 6. Nebengruppe des Periodensystems, in denen das jeweilige Element eine Oxidationsstufe von mindestens +4 aufweist, umfasst, auf die gemaserte Holzoberfläche.

2. Verwendung eines Einkomponenten-Beschichtungssystems, das eine wässrige Polyurethan- und/oder Polyurethan-Polyacrylat-Polymerdispersion umfasst, **dadurch gekennzeichnet, dass** das Beschichtungssystem eine oder mehrere Verbindungen von Elementen der 5. und/oder 6. Nebengruppe des Periodensystems, in denen das jeweilige Element eine Oxidationsstufe von mindestens +4 aufweist, umfasst, zum Beschichten von gemaserten Holzoberflächen.

3. Gemaserte Holzoberfläche, umfassend eine durch Aufbringen eines Einkomponenten-Beschichtungssystems, das eine wässrige Polyurethan- und/oder Polyurethan-Polyacrylat-Polymerdispersion umfasst, **dadurch gekennzeichnet, dass** das Beschichtungssystem eine oder mehrere Verbindungen von Elementen der 5. und/oder 6. Nebengruppe des Periodensystems, in denen das jeweilige Element eine Oxidationsstufe von mindestens +4 aufweist, umfasst, und anschließendes Trocknen des Beschichtungssystems erhaltene Beschichtung.

## Revendications

1. Procédé d'amélioration de l'aspect de surfaces de bois grenées, comprenant les étapes de :
- fourniture d'une surface de bois grenée et
- application d'un système de revêtement à un composant comprenant une dispersion aqueuse de polymère de polyuréthane et/ou polyuréthane-polyacrylate, **caractérisé en ce que** le système de revêtement comprend un ou plusieurs composés d'éléments des sous-groupes 5 et/ou 6 de la table périodique dans lesquels l'élément particulier a un état d'oxydation d'au moins +4, sur la surface de bois grenée.

2. Utilisation d'un système de revêtement à un composant comprenant une dispersion aqueuse de polymère de polyuréthane et/ou polyuréthane-polyacrylate, **caractérisée en ce que** le système de revêtement comprend un ou plusieurs composés d'éléments des sous-groupes 5 et/ou 6 de la table périodique dans lesquels l'élément particulier a un état d'oxydation d'au moins +4, pour le revêtement de surfaces de bois grenées.

3. Surface de bois grenée comprenant un revêtement obtenu par application d'un système de revêtement à un composant comprenant une dispersion aqueuse de polymère de polyuréthane et/ou polyuréthane-polyacrylate, **caractérisée en ce que** le système de revêtement comprend un ou plusieurs composés d'éléments des sous-groupes 5 et/ou 6 de la table périodique dans lesquels l'élément particulier a un état d'oxydation d'au moins +4, et ensuite séchage du système de revêtement.
